# EUROPEAN PATENT SPECIFICATION

(11) **EP 2 469 113 B1**
(45) Date of publication and mention of the grant of the patent: **19.03.2014**
(21) Application number: 11194261.1
(22) Date of filing: 19.12.2011
(51) Int. Cl.: F16D 13/56, F16D 13/72

(54) **Wet friction clutch and straddle-type vehicle equipped with the same**
Nassreibungskupplung und Grätschsitzfahrzeug damit
Embrayage à friction humide et véhicule de type à enfourcher équipé de celui-ci

(30) Priority: 24.12.2010 JP 2010287559
(43) Date of publication of application: 27.06.2012
(73) Proprietor: Yamaha Hatsudoki Kabushiki Kaisha, Shizuoka-ken Shizuoka 438-8501 (JP)
(72) Inventor: Nakagawa, Hironobu, Shizuoka-ken, Shizuoka 438-8501 (JP)
(74) Representative: Stöckeler, Ferdinand

(56) References cited:
- DE-A1- 10 020 262
- US-A- 3 366 210
- US-A1- 2004 206 595

## Description

### BACKGROUND OF THE INVENTION

### Field of the Invention

The present invention relates to a wet friction clutch and a straddle-type vehicle equipped with the wet friction clutch.

### Description of Related Art

Wet friction clutches are conventionally used for, for example, straddle-type vehicles. A wet friction clutch has a clutch housing for supporting a friction plate and a clutch boss for supporting a clutch plate. The clutch housing rotates with the friction plate, and the clutch boss rotates with the clutch plate. When the rotating friction plate is pressed against the clutch plate, a drive force is transmitted from the clutch housing to the clutch boss due to the friction between the friction plate and the clutch plate. When the friction plate and the clutch plate are detached from each other, the transmission of the drive force from the clutch housing to the clutch boss is stopped.

The wet friction clutch used for a straddle-type vehicle, for example, is engaged and disengaged frequently. The wet friction clutch may be used in what is called a half clutch state. That is, the wet friction clutch used for, for example, a straddle-type vehicle may sometimes transmit the drive force while the friction plate is slipping against the clutch plate. However, if the half clutch state is used frequently, the friction plate and the clutch plate are heated excessively, and the durability may be lowered.

In view of this problem, a technique has been proposed for cooling the friction plate and the clutch plate by supplying oil directly to the friction surfaces of the friction plate and the clutch plate. JP 2004-197777 A discloses a clutch boss having a section penetrating from the front side to the back side and a rising part located radially outside the section. In the wet friction clutch disclosed in JP 2004-197777 A, the lubricating oil supplied to the back side of the clutch boss moves radially outward due to the centrifugal force. The lubricating oil is captured by the rising part and is guided through the section to the back side of the clutch boss. The lubricating oil guided to the back side of the clutch boss moves radially outward due to the centrifugal force, so that it is supplied to the friction surfaces of the friction plate and the clutch plate.

An other wet friction clutch is disclosed in DE 100 20 262.

However, with the above-described conventional technique, it is possible that the clutch may not be disengaged properly when a large amount of the oil is supplied. That is, even when the friction plate and the clutch plate are detached from each other, the drive force may be partially transmitted from the friction plate to the clutch plate via the lubricating oil existing between the friction plate and the clutch plate.

The present invention has been accomplished in view of the foregoing and other problems, and it is an object of the invention to improve the durability of the friction plate and the clutch plate without lowering the engagement/disengagement performance of the wet friction clutch.

### BRIEF SUMMARY OF THE INVENTION

A wet friction clutch according to the present invention includes a clutch boss, a clutch housing, a first friction plate, a second friction plate, and a shaft. The clutch boss has a first disc portion and a first support portion, the first disc portion having a hole formed at the center thereof and the first support portion extending frontward from a radially intermediate position of the first disc portion. The clutch housing has a second disc portion and a second support portion, the second disc portion having a hole formed at the center thereof and disposed backward of the first disc portion, and the second support portion extending frontward from the second disc portion and disposed radially outward of the first support portion. The first friction plate is supported on the first support portion so that at least a portion of the first friction plate is located radially outward of the first support portion. The second friction plate is supported on the second support portion so that at least a portion of the second friction plate is located radially inward of the second support portion, the second friction plate facing the first friction plate so as to be contactable with and detachable from the first friction plate. The shaft is inserted through the hole of the clutch boss and the hole of the clutch housing. The shaft has an oil supply passage for supplying oil to a space between the first disc portion and the second disc portion. An oil guide part is formed on a back side of the first disc portion, the oil guide part including a recessed or protruding part extending from the center of the first disc portion toward the outer peripheral edge of the first disc portion and the oil guide part having a surface along which the oil is guided toward the outer peripheral edge.

The present invention makes it possible to improve the durability of the friction plate and the clutch plate without lowering the engagement/disengagement performance of the wet friction clutch.

### BRIEF DESCRIPTION OF THE DRAWINGS

Fig. 1 is a side view of a straddle-type vehicle.
Fig. 2 is a plan view illustrating the arrangement of primary elements of a power unit.
Fig. 3 is a cross-sectional view illustrating a clutch according to Embodiment 1.
Fig. 4 is a back side view illustrating a clutch boss according to Embodiment 1.
Fig. 5 is a cross-sectional view taken along line V-V of Fig. 4.
Fig. 6 is a view for illustrating processing of the clutch boss.
Fig. 7 is a back side view illustrating a clutch boss according to Embodiment 2.
Fig. 8 is a back side view illustrating a clutch boss according to Embodiment 3.
Fig. 9 is a back side view illustrating a clutch boss according to Embodiment 4.
Fig. 10 is a back side view illustrating a clutch boss according to Embodiment 5.
Fig. 11 is a cross-sectional view taken along line XI-XI of Fig. 10.

### DETAILED DESCRIPTION OF THE INVENTION

### < EMBODIMENT 1 >

Hereinbelow, embodiments of the present invention will be described. The wet friction clutch (hereinafter referred to simply as the "clutch") that will be described below is one incorporated in the power unit of a motorcycle. The clutch according to the present invention may be one that is incorporated in the power unit for straddle-type vehicles other than motorcycles, such as ATVs (all terrain vehicles), and may be one that is provided for vehicles other than straddle-type vehicles or for apparatuses other than vehicles.

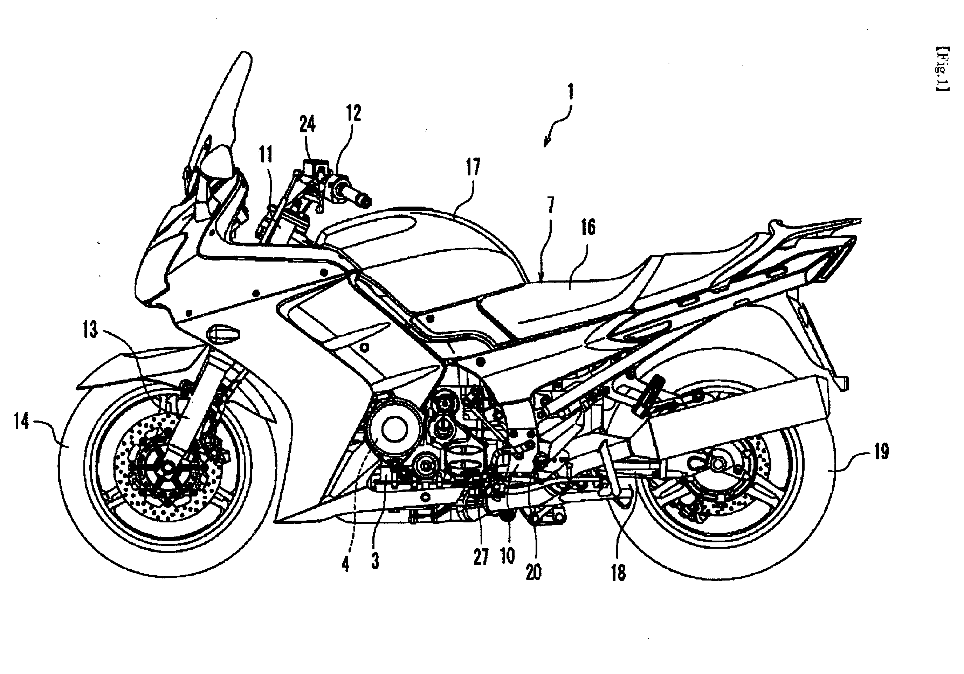

A straddle-type vehicle 1 shown in Fig. 1 is what is called a sport-type straddle-type vehicle. The type of the straddle-type vehicle according to the present invention is, however, not particularly limited. The straddle-type vehicle 1 may be a motor scooter or what is called a moped. The straddle-type vehicle 1 is not limited to an on-road type straddle-type vehicle but may be an off-road type straddle-type vehicle.

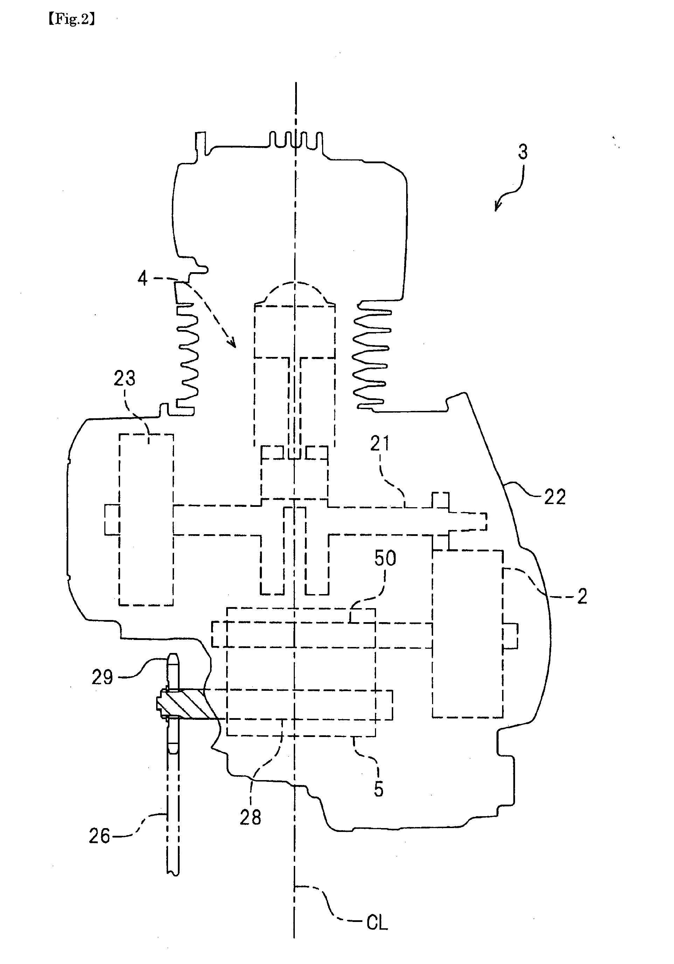

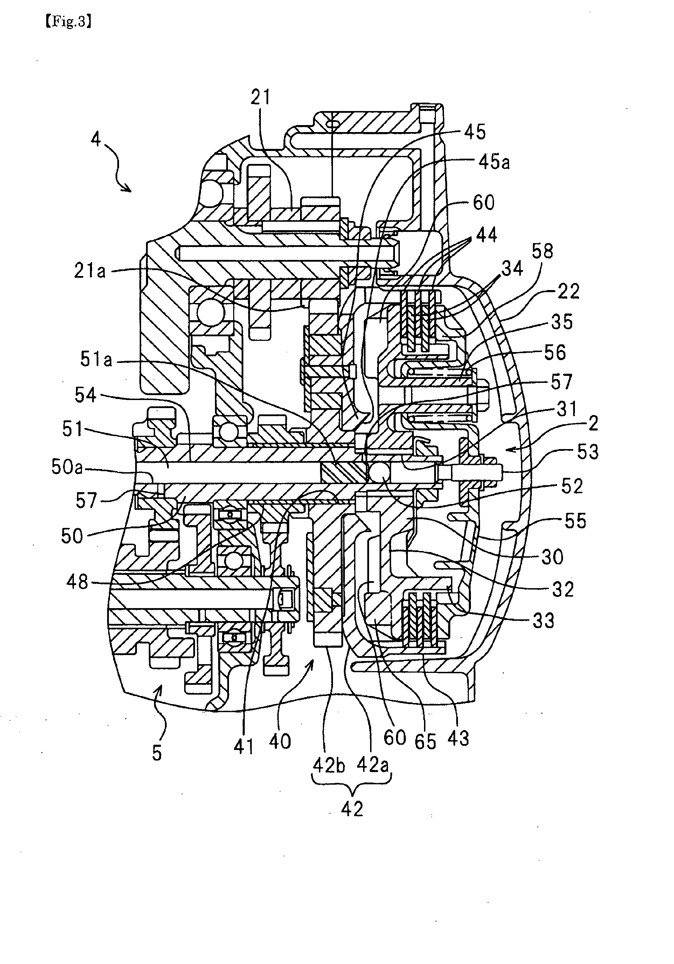

In the following description, the terms "front," "rear," "left," and "right" refer to front, rear, left, and right as defined based on the perspective of the rider seated on a seat 16, respectively, unless specifically indicated otherwise. As illustrated in Fig. 1, the straddle-type vehicle 1 has a vehicle body 7, a front wheel 14, and a rear wheel 19. The vehicle body 7 has a body frame 10. The vehicle body 7 also has a fuel tank 17 and a seat 16, which are supported by the body frame 10. The body frame 10 has a head pipe 11. A handlebar 12 and a front fork 13 are fitted to the head pipe 11. The front wheel 14 is fitted to a lower end portion of the front fork 13. A clutch lever 24 is provided on the handlebar 12. The clutch lever 24 is operated when the rider engages and disengages a clutch 2 (see Fig. 3). Footrests 20 are provided on the left and right of the vehicle body 7. The vehicle body 7 is equipped with a shift pedal 27. The shift pedal 27 is disposed on the left of the vehicle body 7 and in front of the left-side footrest 20. The shift pedal 27 is operated when the rider changes the transmission ratio of a transmission 5 (see Fig. 2).

A power unit 3 is supported on the body frame 10. As illustrated in Fig. 2, the clutch 2, what is called a dog clutch type transmission 5, and an engine 4 having a crankshaft 21 are accommodated in the power unit 3. The type of the engine 4 is not limited in any way. The engine 4 may be either an air-cooled engine or a water-cooled engine. The engine 4 may be a single-cylinder engine or a multi-cylinder engine, such as a two-cylinder engine or a four-cylinder engine. The engine 4 may be a four-cycle engine or a two-cycle engine. It is also possible to use a driving source other than the engine 4, such as an electric motor. The type of the transmission 5 is not limited in any way either. The transmission 5 is not limited to a multiple gear ratio type transmission, but may be a continuously variable transmission such as a V-belt type continuously variable transmission. The transmission 5 is interposed between a main shaft 50 and a drive shaft 28. The transmission 5 transmits drive force from the main shaft 50 to the drive shaft 28 at a predetermined transmission ratio. A sprocket 29 is secured to an end of the drive shaft 28. A chain 26 is wrapped around the sprocket 29. In Fig. 2, reference numeral 23 denotes an alternator.

As illustrated in Fig. 1, a rear arm 18 is supported swingably on the body frame 10. The rear wheel 19 is fitted to a rear end portion of the rear arm 18. The rear wheel 19 is coupled to the drive shaft 28 via the chain 26 and the sprocket 29 (see Fig. 2). The chain 26 is one example of power transmission mechanism for transmitting the drive force of the drive shaft 28 to the rear wheel 19. The type of the power transmission mechanism is not limited in any way. For example, it is possible to use belts and drive shafts, other than the chain 26. The drive force generated by the engine 4 is transmitted to the rear wheel 19 through the crankshaft 21, the clutch 2, the main shaft 50, the transmission 5, the drive shaft 28, and the chain 26.

Fig. 3 is a cross-sectional view illustrating the clutch 2 and so forth. The clutch 2 is a friction clutch used in an environment in which oil is present in the surrounding region, in other words, a wet friction clutch. The clutch 2 is disposed in a hermetically sealed crankcase 22. The clutch 2 is not exposed to the outside air. The clutch 2 has a clutch boss 30, a clutch housing 40, and the main shaft 50. As illustrated in Fig. 2, in the present embodiment, the clutch 2 is disposed rightward of the vehicle center line CL. Thus, herein, the front side of the clutch 2 means the right side thereof, and the back side of the clutch 2 means the left side thereof. In the following description, the right side of the clutch 2 may be referred to as the "front side," and the left side thereof may be the "back side" as needed. It is, however, also possible to dispose the clutch 2 leftward of the vehicle center line CL. In that case, the front side of the clutch 2 is the left side thereof, and the back side of the blotch 2 is the right side thereof.

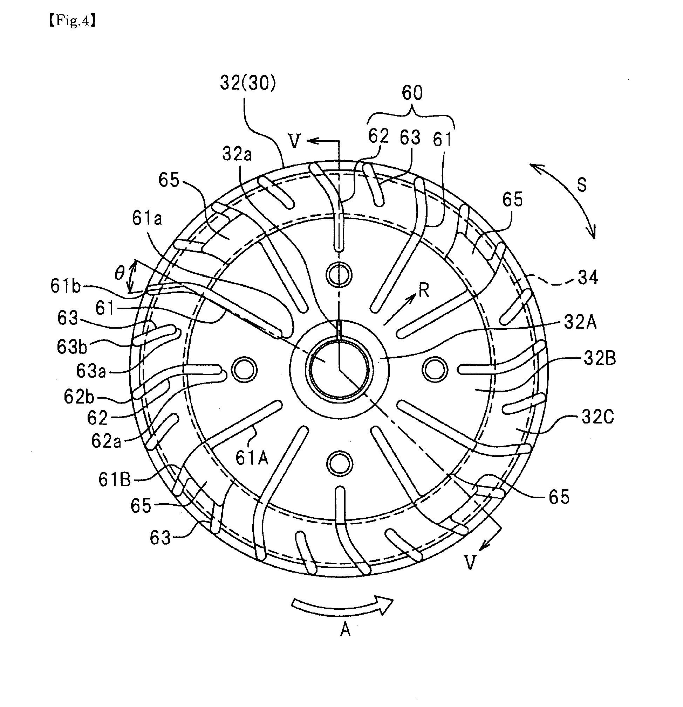

As illustrated in Fig. 3, the clutch boss 30 has a first disc portion 32 having a hole 31 formed at its center, and a first support portion 33 extending rightward from the first disc portion 32. The main shaft 50 is inserted in the hole 31. Grooves are formed respectively in the inner circumferential surface of the hole 31 and in the outer circumferential surface of the main shaft 50 so that the first disc portion 32 and the main shaft 50 mesh with each other. The main shaft 50 rotates with the clutch boss 30. Hereinbelow, a direction radially outward from the center of the main shaft 50 is referred to as a "radial direction" (see reference character R in Fig. 4), and a direction circling around the center of the main shaft 50 is referred to as a "circumferential direction" (see reference character S in Fig. 4). The first support portion 33 is provided along the circumferential direction at every predetermined gap. The first support portion 33 extends rightward from a radially intermediate position of the first disc portion 32.

The first support portion 33 supports a plurality of clutch plates 34. The clutch plates 34 are aligned along a rightward direction. The clutch plates 34 are supported so that they cannot move in the circumferential direction relative to the first support portion 33. As a result, the clutch plates 34 rotate together with the clutch boss 30. The clutch plates 34 are supported so that they can move in the leftward and rightward directions relative to the first support portion 33. As one example, two clutch plates 34 are depicted in Fig. 3, but the number of the clutch plates 34 is not limited in any way.

The clutch housing 40 has a second disc portion 42 having a hole 41 formed at its center, and a second support portion 43 extending rightward from the second disc portion 42. The second disc portion 42 includes a body 42a, integrally formed with the second support portion 43, and a gear 42b. The body 42a and the gear 42b are separate parts, and the gear 42b is fitted on the body 42a. However, the body 42a and the gear 42b may not be separate parts but may be integrally formed with each other. The gear 42b meshes with a gear 21a of the crankshaft 21. The gear 42b rotates with the crankshaft 21. The main shaft 50 is inserted through the hole 41 of the second disc portion 42. A needle bearing 48 is provided between the inner circumferential surface of the hole 41 and the outer circumferential surface of the main shaft 50. The clutch housing 40 is rotatable relative to the main shaft 50. The second disc portion 42 is located leftward of the first disc portion 32. The second support portion 43 is located radially outward from the first support portion 33.

The second support portion 43 supports a plurality of friction plates 44. The friction plates 44 are aligned rightward of the second disc portion 42. The friction plates 44 and the clutch plates 34 are disposed alternately facing each other. Each of the clutch plates 34 is disposed between the two adjacent friction plates 44. The friction plates 44 are supported so that they cannot move in the circumferential direction relative to the second support portion 43. As a result, the friction plates 44 rotate together with the clutch housing 40. The friction plates 44 are supported so that they can move in the leftward and rightward directions relative to the second support portion 43. As one example, three friction plates 44 are depicted in Fig. 3, but the number of the friction plates 44 is not limited in any way.

A pressure plate 55 is disposed rightward of the clutch boss 30. A contact portion 58 that can come into contact with the friction plate 44 that is located rightmost is formed at a radially outside portion of the pressure plate 55. It should be noted that when the plate that is located rightmost is a clutch plate 34, the contact portion 58 is formed so that it can come in contact with the clutch plates 34. Instead of directly coming into contact with the friction plate 44 or the clutch plate 34, the contact portion 58 may be formed that it can indirectly come in contact with the friction plate 44 or the clutch plate 34. The clutch boss 30 has a projecting portion 35 projecting rightward. A spring 56 for urging the pressure plate 55 leftward is provided between the projecting portion 35 and the pressure plate 55. The pressure plate 55 is put under a leftward force constantly by the spring 56, so the contact portion 58 presses the friction plate 44 leftward. Thereby, the friction plates 44 and the clutch plates 34 are pressed against each other, and drive force is transmitted from the clutch housing 40 to the clutch boss 30 due to the friction between the friction plates 44 and the clutch plates 34.

The pressure plate 55 is provided with a mechanism for interlocking with the clutch lever 24. In the present embodiment, A push shaft 51, a ball 52, and a portion of a slide shaft 53 are provided inside the main shaft 50. The push shaft 51 is coupled to the clutch lever 24. The slide shaft 53 is secured to the pressure plate 55 so that it can move with the pressure plate 55 in the leftward and rightward directions. The ball 52 is interposed between the push shaft 51 and the slide shaft 53. The ball 52 is rotatably in contact with the push shaft 51 and the slide shaft 53. The slide shaft 53 is rotatable relative to the push shaft 51 via the ball 52. When the rider grips the clutch lever 24 (see Fig. 1), the push shaft 51 moves rightward. As a result, the pressure plate 55 is pressed rightward with the ball 52 and the slide shaft 53 so that the pressure plate 55 moves rightward. When the rider releases the clutch lever 24, the pressing force that presses the pressure plate 55 rightward is lost, so that the pressure plate 55 moves leftward because of the force of the spring 56. It should be noted that the just-described mechanism is merely an example, and the specific configuration of the mechanism for interlocking the clutch lever 24 and the pressure plate 55 is not limited in any way. For example, the mechanism may be a mechanism such as to pull the pressure plate 55 from the right in response to the operation of the clutch lever 24.

The quantity of movement of the pressure plate 55 is adjusted by the pulling quantity of the clutch lever 24, in other words, the pivot position of the clutch lever 24. When the rider pivots the clutch lever 24 to an intermediate position, the pressing force of the contact portion 58 against the friction plate 44 is weakened, so the force that presses the friction plates 44 and the clutch plates 34 against each other is weakened. As a result, the friction plates 44 slip against the clutch plates 34, and the clutch 2 enters a half clutch state. As the rider further pivots the clutch lever 24, the pressure plate 55 moves rightward, so that the contact portion 58 moves away from the friction plate 44. As a result, the friction plates 44 and the clutch plates 34 are detached from each other, and the transmission of the drive force from the clutch housing 40 to the clutch boss 30 is stopped.

In the power unit 3, there are a plurality of sliding portions to which oil is supplied. An oil supply passage 54 for guiding oil supplied from an oil pump, which is not shown, is formed in the main shaft 50. In the present embodiment, the oil supply passage 54 is formed by, for example, a gap between the inner circumferential surface of a hole 50a of the main shaft 50 and the outer circumferential surface of the push shaft 51, and holes 57 extending radially from the hole 50a of the main shaft 50. A helical groove 51 a is formed in an end portion of the push shaft 51. The groove 51 a allows the oil to be supplied appropriately to the rightmost end portion of the main shaft 50. The oil inside the main shaft 50 receives centrifugal force in association with rotation of the main shaft 50 and flows out through the holes 57. The oil that has flowed out from the holes 57 is supplied to the space between the clutch boss 30 and the clutch housing 40.

A projecting portion 45 surrounding the hole 41 and projecting rightward is formed in the front side of the second disc portion 42 (more particularly in the front side of the body 42a) of the clutch housing 40. The projecting portion 45 is formed annularly around the center of the main shaft 50. The projecting portion 45 has an inclined surface 45a whose radially outside portion is directed more rightward. The inclined surface 45a is located radially outward of the holes 57 so that they serve to guide the oil flowing out from the holes 57 in the rightward direction. In other words, the inclined surface 45a serves the role of guiding the oil flowing out from the holes 57 toward the back side of the first disc portion 32 of the clutch boss 30. The projecting portion 45 is, however, not always necessary, and it is possible to omit the projecting portion 45.

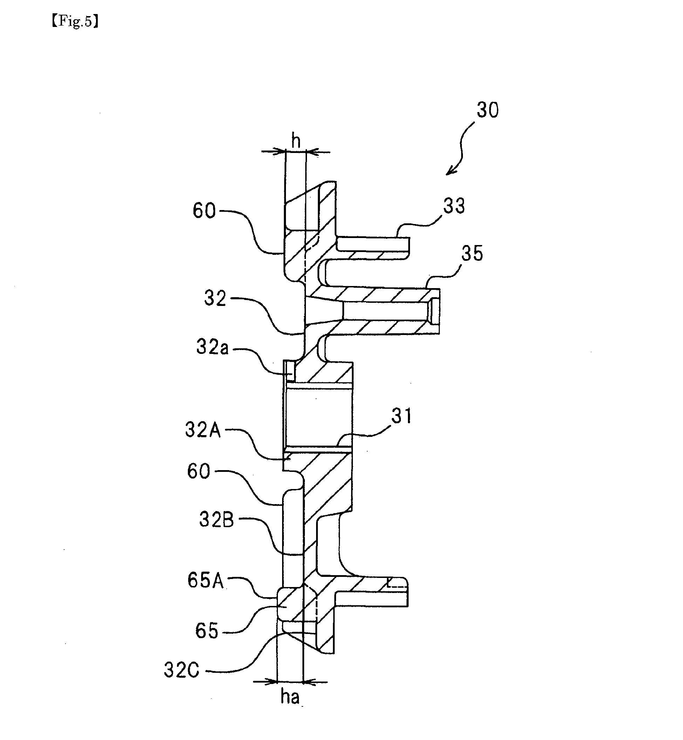

A plurality of fins 60 rising backward are formed on the back side of the first disc portion 32. Fig. 4 is a back side view showing the first disc portion 32 viewed from the left, and Fig. 5 is a cross-sectional view taken along line V-V of Fig. 4. In Fig. 4, reference character R indicates a radial direction, and reference character S indicates a circumferential direction. As illustrated in Fig. 4, each of the fins 60 extends from the center toward the outer peripheral edge. Herein, the phrase "extending from the center toward the outer peripheral edge" means that one end of the fin 60 is located more outward along a radial direction R than the other end thereof. The phrase "extending from the center toward the outer peripheral edge" means to include not only the case in which the fin 60 extends in a linear shape along a radial direction R but also the case in which at least a portion of the fin 60 extends in a direction inclined from the radial direction R in a linear shape or in a curved shape. The fin 60 is one example of a part having a surface along which oil is guided toward the outer peripheral edge, i.e., an oil guide part.

As illustrated in Figs. 4 and 5, a tubular collar 32A is formed at a central portion of the first disc portion 32. As illustrated in Fig. 4, a slit 32a extending in a radial direction R is formed in the collar 32A. As illustrated in Fig. 4, the slit 32a serves the role of supplying the oil from the holes 57 to the back side surface of the first disc portion 32. The number of the slit 32a is not limited to one. Two or more slits 32a may be formed, for example, radially. The slit 32a is, however, not always necessary.

The fins 60 are generally classified into first fins 61, second fins 62, and third fins 63, which have different lengths. The first fins 61 are longer than the second fins 62, and the third fins 63 are shorter than the second fins 62. Each of the second fins 62 is disposed between the two first fins 61 that are adjacent to each other along the circumferential direction S. Each of the third fins 63 is disposed between the two first fins 61 that are adjacent to each other along the circumferential direction S or between the first fin 61 and the second fin 62 that are adjacent to each other along the circumferential direction S. The width of the first fins 61, that of the second fins 62, and that of the third fins 63 are equal to each other. However, the width of the first fins 61, that of the second fins 62, and that of the third fins 63 may be different from each other. The width of the first fins 61, that of the second fins 62, and that of the third fins 63 are constant. However, at least one of the first fins 61, the second fins 62, and the third fins 63 may have a width that is varied along the longitudinal direction. The cross-sectional shape of the first fins 61, the second fins 62, and the third fins 63 is a rectangular shape. However, the cross-sectional shape thereof is not particularly limited, and may be other shapes such as a triangular shape. However, the fins in a rectangular shape have the advantage that they can be manufactured easily.

At least a portion of each of the first fins 61, the second fins 62, and the third fins 63 are located leftward of the clutch plates 34 and the friction plates 44(see Fig. 3). In other words, at least a portion of each of the first fins 61, the second fins 62, and the third fins 63 is at the same radial direction R-wise position as are the clutch plates 34 and the friction plates 44. The inner end 61 a of the first fin 61 is located closer to the center than the radial direction R-wise mid position of the first disc portion 32, and the outer end 61b of the first fin 61 is located closer to the outer peripheral edge of the first disc portion 32. The inner end 62a of the second fin 62 is located near the radial direction R-wise mid position of the first disc portion 32, and the outer end 62b of the second fin 62 is located closer to the outer peripheral edge of the first disc portion 32. The inner end 63a of the third fin 63 is located leftward of the first support portion 33 (see Fig. 3), and the outer end 63b of the third fin 63 is located closer to the outer peripheral edge of the first disc portion 32.

The number of the fins 60 is greater in a radial direction R-wise outward portion of the first disc portion 32 than in a central portion thereof. The gap between the first fins 61 is wider toward a radial direction R-wise outward portion. However, because the second fins 62 and/or the third fins 63 are disposed between the adjacent first fins 61, the fin gap is kept relatively small. Thus, according to the present embodiment, a plurality of fins 60 are evenly disposed in the back side of the first disc portion 32 by using a plurality of fins 61, 62, and 63 having different lengths.

The inner portion 61 A of the first fin 61 extends in a linear shape along the radial direction R, and the outer portion 61B thereof is inclined from the radial direction R. Although the outer portion 61B may be inclined opposite to the direction A of rotation of the clutch boss 30, the outer portion 61B is inclined to the direction A of rotation in the present embodiment. Although the outer portion 61 B may extend in a linear shape, the outer portion 61B is curved in the present embodiment. The outer portion 61B is inclined in such a manner that the inclination angle θ with respect to the radial direction R is greater toward the outer peripheral edge. Each of the second fins 62 has the same configuration. Each of the third fins 63 is curved and is inclined more to the direction A of rotation the clutch boss 30 toward the outer peripheral edge.

An intermediate portion 32B and an outer peripheral portion 32C are formed outward of the collar 32A of the first disc portion 32 in that order. As illustrated in Fig. 5, the outer peripheral portion 32C is recessed more rightward than the intermediate portion 32B. The height h of the first fins 61, that of the second fins 62, and that of the third fins 63, in other words, the protruding quantities of the fins from the surface of the intermediate portion 32B of the first disc portion 32, are equal to each other. The height h is set equal to the height of the collar 32A. However, the height h of the first fins 61, that of the second fins 62, and that of the third fins 63 may be different from each other. The height h may be different from the height of the collar 32A.

The clutch 2 is accommodated in the hermetically sealed crankcase 22, and the outside air is not introduced in the space at the back of the first disc portion 32. A dry clutch having fins for introducing the outside air is known, but the fins 60 of the present embodiment are fundamentally different from the fins for guiding the outside air. Moreover, the fins for introducing the outside air are provided on the opposite side to the vehicle center CL (see Fig. 2), that is, on the front side. In contrast, the fin 60s are provided on the back side. The fins 60 are provided on the surface of the clutch boss 30 that faces the vehicle center CL.

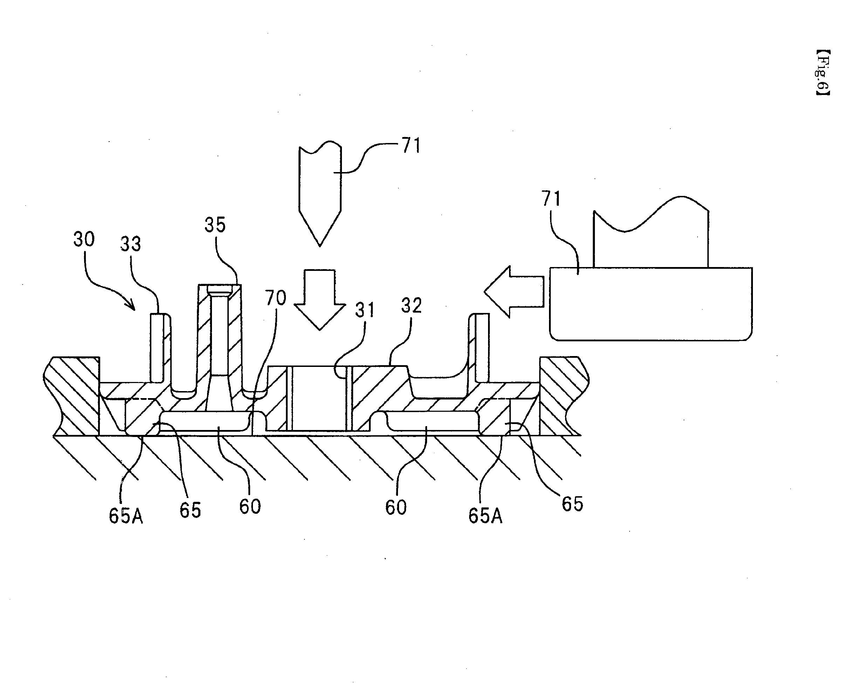

As illustrated in Figs. 4 and 5, bases 65 each having a flat top face 65A and protruding backward are formed on the back side of the first disc portion 32. The clutch boss 30 is produced by die casting. As illustrated in Fig. 6, the clutch boss 30 after being removed from the die is supported on a pedestal 70 and is processed by various types of processing tools 71 for performing a cutting process, a polishing process, or the like. The bases 65 serve the role of receiving the load of the clutch boss 30 that is pressed by the processing tool 71 or the like during the processing of the clutch boss 30. In addition, the bases 65 are used as the reference for processing positions. Each of the bases 65 is constructed of a solid body in order to increase the strength. The height ha of the top face 65A of the base 65 (see Fig. 5) is set higher than the height h of the fins 60 so that the fins 60 are not squashed during the processing. As illustrated in Fig. 4, the base 65 is formed across the outer portion 61B of the first fin 61 and the third fin 63. The horizontal width of the base 65 is wider than the horizontal width of each of the fins 60.

From the viewpoint of supporting the clutch boss 30 stably during the processing, it is preferable that the number of the bases 65 should be larger. On the other hand, when the number of the bases 65 is too large, the surface area of the fins 60 decreases relatively. When the surface area of the fins 60 decreases, the effect of improving the cooling performance of the clutch boss 30 by the fins 60 lessens. For this reason, in the present embodiment, four bases 65 in total are disposed at regular intervals along the circumferential direction S so that the clutch boss 30 can be supported stably during the processing and also the effect of improving the cooling performance by the fins 60 can be obtained sufficiently. It should be noted, however, that the number of the bases 65 is not limited to 4, but the number of the bases 65 may be 2, 3, or 5 or more.

The bases 65 are formed radially inward of the outer peripheral edge of the first disc portion 32. It should be noted, however, that a portion of the base 65 may be formed on the outer peripheral edge of the first disc portion 32.

The clutch 2 is frequently engaged and disengaged during operation of the power unit 3, so the clutch boss 30 and the clutch housing 40 are heated by the friction between the clutch plates 34 and the friction plates 44. As illustrated in Fig. 3, the first support portion 33 is located radially inward of the second support portion 43, and the clutch boss 30 is disposed inward of the clutch housing 40. The clutch boss 30 is surrounded by the clutch housing 40 and the pressure plate 55, so the clutch boss 30 is likely to have a high temperature.

During operation of the power unit 3, oil is supplied from the inside of the main shaft 50 through the holes 57 and the slit 32a to the back side of the first disc portion 32. The oil supplied to the back side of the first disc portion 32 receives centrifugal force in association with rotation of the first disc portion 32 and flows along the surface of the first disc portion 32 from the center toward the outer peripheral edge. Since the fins 60 are formed on the back side of the first disc portion 32 as illustrated in Fig. 4, the oil flows along the surfaces of the fins 60, in addition to along the surfaces of the intermediate portion 32B and the outer peripheral portion 32C of the first disc portion 32, toward the outer peripheral edge. In association with rotation of the first disc portion 32, centrifugal force acts on the oil, and the flow of air forms around the oil. However, because the contact area between the oil and the first disc portion 32 is large, the oil does not easily come off from the first disc portion 32 even with the centrifugal force and the flow of air. The oil is kept attached on the first disc portion 32 until it reaches the outer peripheral edge of the first disc portion 32. After reaching the outer peripheral edge of the first disc portion 32, the oil quickly flows outside the first disc portion 32. While flowing along the surface of the first disc portion 32, the oil carries heat away from the first disc portion 32. In this way, the clutch boss 30 is cooled by the oil. If the oil remains on the first disc portion 32, the cooling performance of the clutch boss 30 can be lowered. However, since the oil flows outside the first disc portion 32 quickly, the cooling performance of the clutch boss 30 is kept high.

Since heat is produced by the friction between the clutch plates 34 and the friction plates 44, the portion of the clutch boss 30 near the clutch plates 34 and the friction plates 44, in other words, the outer peripheral portion of the clutch boss 30, is especially likely to have a high temperature. According to the present embodiment, the oil does not easily come off from the first disc portion 32, and flows along the surface of the first disc portion 32 until it reaches the outer peripheral edge. As a result, the portion of the clutch boss 30 near the clutch plates 34 and the friction plates 44 can be effectively cooled by the oil.

As described above, in the clutch 2 according to the present embodiment, oil is not directly supplied to the friction surfaces of the clutch plates 34 and the friction plates 44. For this reason, even when the amount of the oil supplied is large, there is no risk of the oil being present excessively between the clutch plates 34 and the friction plates 44. Therefore, poor disengagement of the clutch 2 does not occur easily, and it is possible to keep the engagement/disengagement performance of the clutch 2 high.

The fins 60 extending from the center toward the outer peripheral edge are formed on the back side the first disc portion 32 of the clutch boss 30. As a result, the surface area of the back side of the first disc portion 32 can be made large, and the cooling performance of the first disc portion 32 can be enhanced. Moreover, the fins 60 inhibit the oil from moving in the circumferential direction and at the same time help the oil to move toward the outer peripheral edge. For this reason, the oil supplied from the main shaft 50 to the space between the first disc portion 32 and the second disc portion 42 can be prevented from scattering from the first disc portion 32 and at the same time can be guided toward the outer peripheral edge of the first disc portion 32 along the fins 60. As a result, the outer peripheral portion of the clutch boss 30, which is most likely to have a high temperature, can be efficiently cooled by the oil. Although the oil is not directly supplied to the friction surfaces of the clutch plates 34 and the friction plates 44 in the clutch 2, temperature rise of the clutch boss 30 can be sufficiently inhibited. The present embodiment makes it possible to improve the durability of the clutch plates 34 and the friction plates 44 without lowering the engagement/disengagement performance of the friction clutch 2.

The oil guide part for guiding the oil toward the outer peripheral edge is not limited to the fins 60, but may be a part, formed on the back side of the first disc portion 32, extending from the center of the first disc portion 32 toward the outer peripheral edge of the first disc portion 32 and having a recessed shape, a protruding shape, or other shapes. For example, a plurality of grooves may be formed in the surface of the back side of the first disc portion 32. Alternatively, the surface of the back side of the first disc portion 32 may be formed in a wavy shape. Nevertheless, with the fins 60, the oil guide part can be constructed in a relatively simple structure.

In the clutch 2 according to the present embodiment, at least a portion of each of the fins 60 is disposed at the same radial position as are the clutch plates 34 and the friction plates 44. This allows the portion of the first disc portion 32 that is likely to have a high temperature, i.e., the surface area of the portion of the first disc portion 32 that is at the same radial position as are the clutch plates 34 and the friction plates 44, to have a large surface area. In addition, oil can be guided to that portion easily. As a result, the clutch boss 30 can be cooled efficiently.

Each of the first fins 61 has the inner portion 6 1 A located radially inward of the first support portion 33 and the outer portion 61B radially outward of the first support portion 33. Each of the second fins 62 has the same configuration. Therefore, by the first fins 61 and the second fins 62, oil can be guided reliably from a position inward of the first support portion 33 to a position outward of the first support portion 33. As a result, the clutch boss 30 can be cooled more efficiently.

The first fins 61 extend from a position radially inward of the first support portion 33 to a position radially outward thereof, and they are aligned along the circumferential direction. Each of the second fins 62 and the third fins 63, which has a radial length shorter than that of the first fins 61, is disposed between the first fins 61, and at least a portion of each of the second fins 62 and the third fins 63 is located radially outward of the first support portion 33. Because of such an arrangement, the number of the fins 60 is larger in the outer peripheral edge region than in the central region. Therefore, the outer peripheral portion of the first disc portion 32, in which the temperature is likely to be high, can be effectively cooled. In addition, the gap between the fins 60 can be prevented from becoming narrow in the central region of the first disc portion 32. It is difficult to process a plurality of fins with a narrow gap. However, according to the present embodiment, the gap between the fins 60 can be kept relatively wide, so the fins 60 can be formed relatively easily.

At least a portion of each of the fins 60 extends so as to intersect with a radial direction. This allows the fins 60 to have a larger surface area than the case that each of the fins 60 extends in a linear shape along a radial direction.

At least a portion of the fins 60 is inclined with respect to the radial direction to the direction of rotation of the clutch boss 30 toward the outer peripheral edge. As a result, the oil does not scatter easily while the clutch boss 30 is rotating, allowing the oil and the fins 60 to be in contact with each other for a long time. Therefore, the cooling efficiency can be improved.

The outer portion 61B of each of the first fins 61, the outer portion of each of the second fins 62, and each of the third fins 63 has a greater inclination angle θ with respect to the radial direction in their outer peripheral portions than in their central portions. This allows the outer peripheral portion of the first disc portion 32, which particularly requires cooling, to be in contact with the oil for a long time, making it possible to improve the cooling efficiency.

The bases 65 each having the flat top face 65A are formed on the back side of the first disc portion 32. The height ha of the top face 65A is higher than the height h of the fins 60. Providing the fins 60 on the back side of the first disc portion 32 may make processing of the front side of the first disc portion 32 difficult. However, by providing the bases 65, the back side of the first disc portion 32 can be pressed against the top of the pedestal 70 without damaging the fins 60. Moreover, since the bases 65 can be utilized as the reference for the processing, the processing is made easy. As a result, although the fins 60 protruding backward are formed on the back side of the first disc portion 32, the clutch boss 30 can be processed easily.

The projecting portion 45, which projects frontward and extends in the circumferential direction, is formed in the front side of the second disc portion 42 of the clutch housing 40 and radially inward of the fins 60. The oil flowing out from the holes 57 is guided rightward by the projecting portion 45. As a result, the oil flowing out from the holes 57 is inhibited from scattering radially outwardly, and the oil is guided smoothly to the back side of the first disc portion 32. As illustrated in Fig. 3, the right end of the projecting portion 45 is located rightward of the left end of the fins 60. In other words, the projecting portion 45 projects so as to reach a position radially overlapping at least a portion of the fins 60. This allows the oil to be guided toward the back side of the first disc portion 32 more effectively.

### < EMBODIMENT 2 >

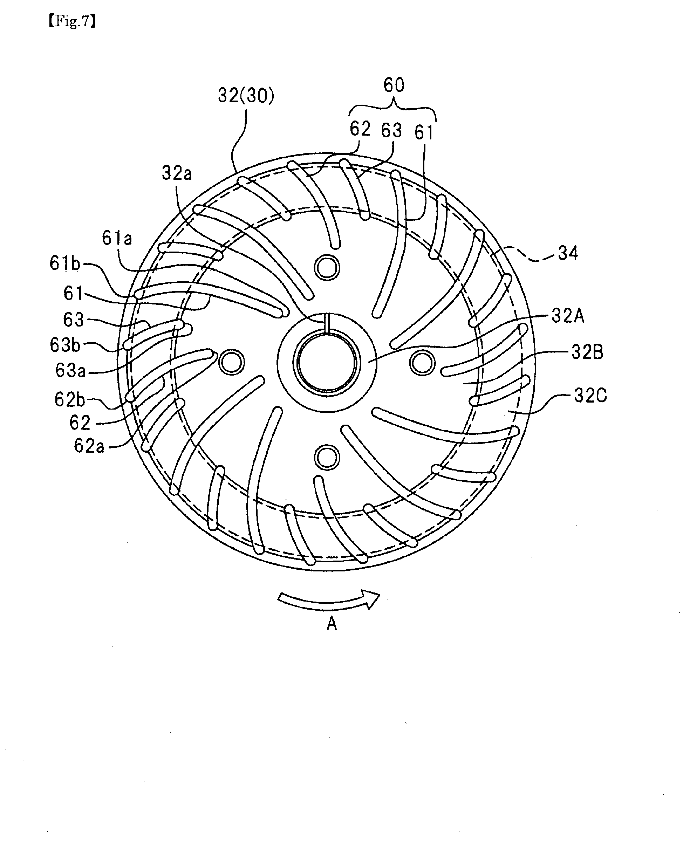

The shapes, dimensions, numbers, and so forth of the fins 60 are not limited in any way. For example, the fins 60 may be disposed in the manner as shown in Fig. 7. In a clutch according to Embodiment 2 as well, the fins 60 include first fins 61, second fins 62, and third fins 63, as illustrated in Fig. 7. In the present embodiment, the entirety of each of the first fins 61, the entirety of each of the second fins 62, and the entirety of each of the third fins 63 are inclined with respect to the radial direction. The first fins 61, the second fins 62, and the third fins 63 are inclined to the direction A of rotation of the clutch boss 30. In other respects, this embodiment is the same as Embodiment 1. Although the bases 65 are not shown in Fig. 7, it is of course possible to provide the bases 65.

### < EMBODIMENT 3 >

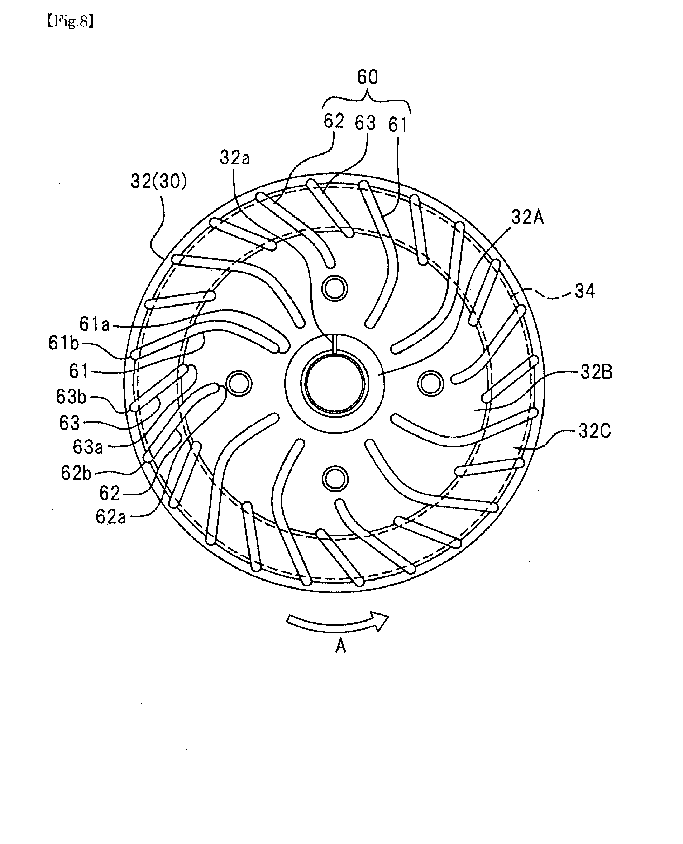

In a clutch according to Embodiment 3 as well, the fins 60 include first fins 61, second fins 62, and third fins 63, as illustrated in Fig. 8. In the present embodiment, the outer portion of each of the first fins 61, the outer portion of each of the second fins 62, and the entirety of each of the third fins 63 are formed in a linear shape. In other respects, this embodiment is the same as Embodiment 1. In addition, although the bases 65 are not shown in Fig. 8, it is of course possible to provide the bases 65.

### < EMBODIMENT 4 >

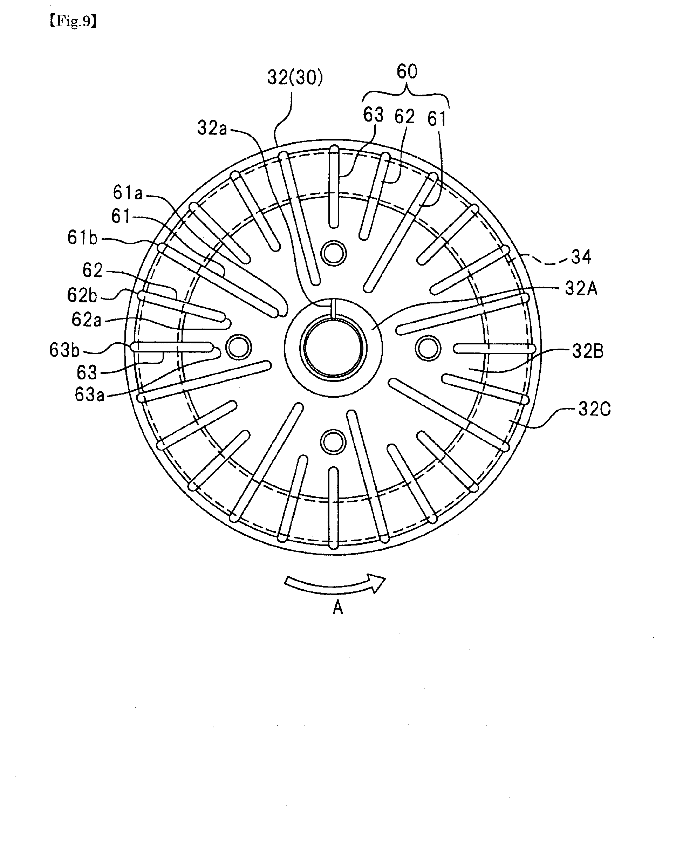

In a clutch according to Embodiment 4 as well, the fins 60 include first fins 61, second fins 62, and third fins 63, as illustrated in Fig. 9. In the present embodiment, the entirety of each of the first fins 61, the entirety of each of the second fins 62, and the entirety of each of the third fins 63 are formed in a linear shape along the radial direction. All of the fins 61, 62, and 63 are disposed radially. In other respects, this embodiment is the same as Embodiment 1. In addition, although the bases 65 are not shown in Fig. 9, it is of course possible to provide the bases 65.

### < EMBODIMENT 5 >

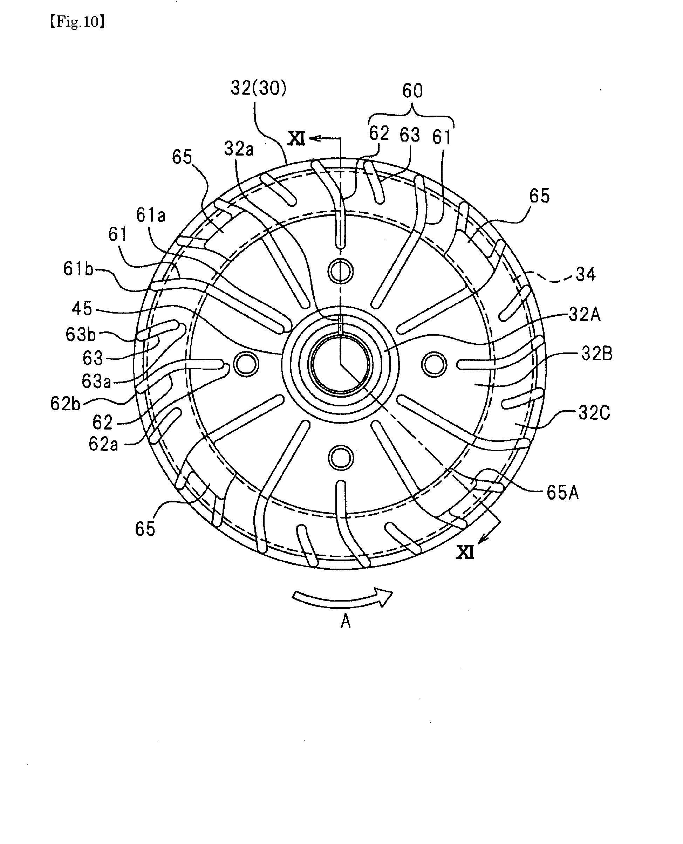

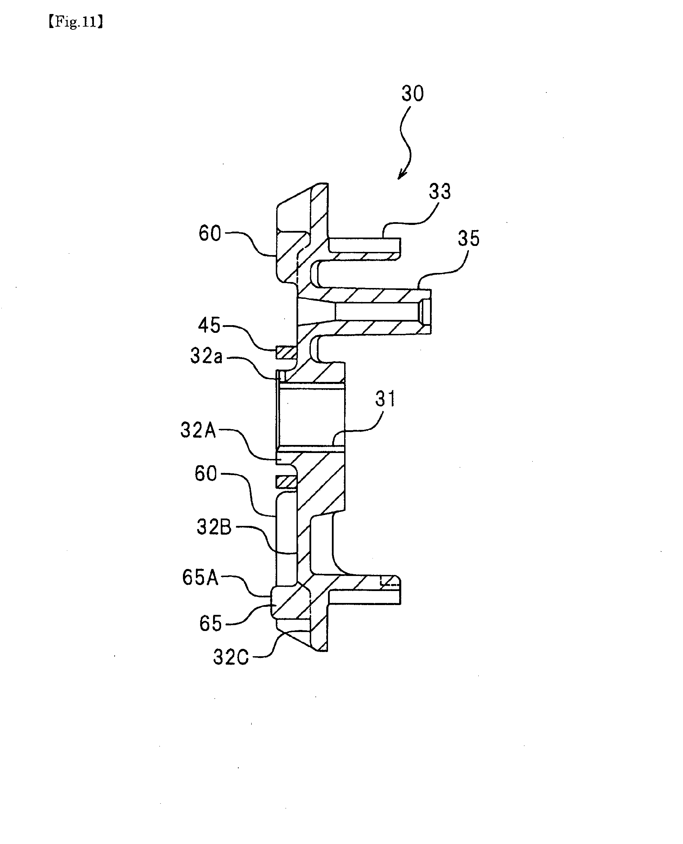

In the clutch 2 according to Embodiment 1, the second disc portion 42 of the clutch housing 40 is provided with the projecting portion 45, which is for guiding the oil flowing out from the holes 57 to the back side of the first disc portion 32 of the clutch boss 30. As illustrated in Figs. 10 and 11, in a clutch 2 according to Embodiment 5, the first disc portion 32 of the clutch boss 30 is provided with the projecting portion 45. In the present embodiment, the projecting portion 45 is disposed around the collar 32A of the first disc portion 32. The projecting portion 45 is formed on the back side of the first disc portion 32 and radially inward of the fins 60. The projecting portion 45 projects backward from the first disc portion 32 and extends in a circumferential direction. The projecting portion 45 may be a separate part from the first disc portion 32 or may be integrally formed with the first disc portion 32. In the present embodiment, the second disc portion 42 of the clutch housing 40 is not provided with the projecting portion 45. However, both the second disc portion 42 of the clutch housing 40 and the first disc portion 32 of the clutch boss 30 may be provided with respective projecting portions 45 as long as they do not interfere with each other.

### <OTHER MODIFIED EMBODIMENTS>

In each of the above-described embodiments, the fins 60 include three types of fins 61-63 having different lengths. However, the fins 60 may include two types, or four or more types of fins having different lengths or widths. It is also possible that the fins 60 include a plurality of fins of a single type.

The clutch 2 according to each of the above-described embodiments is a multiple plate clutch, which has a plurality of clutch plates 34 and a plurality of friction plates 44. The multiple plate clutch tends to produce more frictional heat and is more likely to have a higher temperature than the single plate clutch. For this reason, the effect of cooling the clutch boss 30 with oil can be exhibited more significantly. Nevertheless, the wet friction clutch according to the present invention may be a wet-type single plate clutch.

Only selected embodiments have been chosen to illustrate the present invention. To those skilled in the art, however, it will be apparent from the foregoing disclosure that various changes and modifications can be made herein without departing from the scope of the invention as defined in the appended claims. Furthermore, the foregoing description of the embodiments according to the present invention is provided for illustration only, and not for limiting the invention as defined by the appended claims and their equivalents.

## Claims

1. A wet friction clutch (2) comprising:
a clutch boss (30) having a first disc portion (32) and a first support portion (33), the first disc portion (32) having a hole (31) formed at the center thereof and the first support portion (33) extending frontward from a radially intermediate position of the first disc portion (32);
a clutch housing (40) having a second disc portion (42) and a second support portion (43), the second disc portion (42) having a hole (41) formed at the center thereof and disposed backward of the first disc portion (32), and the second support portion (43) extending frontward from the second disc portion (42) and disposed radially outward of the first support portion (33);
a first friction plate (34) supported on the first support portion (33) so that at least a portion of the first friction plate (34) is located radially outward of the first support portion (33);
a second friction plate (44) supported on the second support portion (42) so that at least a portion of the second friction plate (44) is located radially inward of the second support portion (42), the second friction plate (44) facing the first friction plate (34) so as to be contactable with and detachable from the first friction plate (34); and
a shaft (50) inserted through the hole (31) of the clutch boss (30) and the hole (41) of the clutch housing (40) and having an oil supply passage (54) for supplying oil to a space between the first disc portion (32) and the second disc portion (42),
**characterized in that** an oil guide part (60) is formed on a back side of the first disc portion (32), the oil guide part (60) comprising a recessed or protruding part extending from the center of the first disc portion (32) toward the outer peripheral edge of the first disc portion (32) and the oil guide part (60) having a surface along which the oil is guided toward the outer peripheral edge.

2. The wet friction clutch (2) according to claim 1, wherein the oil guide part (60) comprises a fin (61, 62, 63) rising backward from a surface of the back side of the first disc portion (32).

3. The wet friction clutch (2) according to claim 1, wherein at least a portion of the oil guide part (60) is disposed at the same radial position as is the first friction plate (34).

4. The wet friction clutch (2) according to claim 1, wherein at least a portion of the oil guide part (60) has an inner portion located radially inward of the first support portion (33) and an outer portion located radially outward of the first support portion (33).

5. The wet friction clutch (2) according to claim 1, wherein:
the oil guide part (60) comprises:
a plurality of first oil guide parts each extending from a position radially inward of the first support (33) portion to a position radially outward of the first support portion (33) and being aligned along a circumferential direction; and
a plurality of second oil guide parts each disposed between the first oil guide parts and having a radial length shorter than that of the first oil guide parts, at least a portion of each of the second oil guide parts being located radially outward of the first support portion (33).

6. The wet friction clutch (2) according to claim 1, wherein at least a portion of the oil guide part (60) extends so as to intersect with a radial direction (R).

7. The wet friction clutch (2) according to claim 6, wherein at least a portion of the oil guide part (60) is inclined with respect to the radial direction (R) to a direction of rotation of the clutch boss (30) toward the outer peripheral edge.

8. The wet friction clutch (2) according to claim 7, wherein a portion of the oil guide part (60) closer to the outer peripheral edge has a greater inclination angle with respect to the radial direction (R) than a portion thereof closer to the center.

9. The wet friction clutch (2) according to claim 1, wherein:
a base is formed on the back side of the first disc portion (32), the base protruding backward and having a flat top face;
the height of the top face is higher than the height of the oil guide part (60); and
the width of the top face is wider than the width of the oil guide part (60).

10. The wet friction clutch (2) according to claim 1, further comprising a projecting portion formed in the front side of the second disc portion (42) and radially inward of the oil guide part (60), the projecting portion projecting frontward and extending in the circumferential direction (5).

11. The wet friction cluth (2) according to claim 1, wherein:
the oil guide part (60) comprises a fin (61, 62, 63) rising from the back side of the first disc portion (32);
a projecting portion is formed in the front side of the second disc portion (42) and radially inward of the oil guide part (60), the projecting portion projecting frontward and extending in the circumferential direction (5); and
the projecting portion projects so as to reach a position radially overlapping at least a portion of the fin (61, 62, 63).

12. The wet friction clutch (2) according to claim 1, further comprising a projecting portion formed on the back side of the first disc portion (32) and radially inward of the oil guide part (60), the projecting portion projecting backward and extending in the circumferential direction (5).

13. A straddle-type vehicle comprising a wet friction clutch (2) according to claim 1.

## Patentansprüche

1. Eine Nassreibungskupplung (2), die folgende Merkmale aufweist:
eine Kupplungsnabe (30), die einen ersten Scheibenabschnitt (32) und einen ersten Trägerabschnitt (33) aufweist, wobei der erste Scheibenabschnitt (32) ein in der Mitte desselben gebildetes Loch (31) aufweist und sich der erste Trägerabschnitt (33) von einer radial intermediären Position des ersten Scheibenabschnitts (32) nach vorne erstreckt;
ein Kupplungsgehäuse (40), das einen zweiten Scheibenabschnitt (42) und einen zweiten Trägerabschnitt (43) aufweist, wobei der zweite Scheibenabschnitt (42) ein Loch (41) aufweist, das in der Mitte desselben gebildet ist und das hinter dem ersten Scheibenabschnitt (32) gelegen angeordnet ist, und sich der zweite Trägerabschnitt (43) von dem zweiten Scheibenabschnitt (42) nach vorne erstreckt und radial nach außen bezüglich des ersten Trägerabschnitts (33) angeordnet ist;
eine erste Reibungsplatte (34), die auf dem ersten Trägerabschnitt (33) getragen wird, so dass sich zumindest ein Teil der ersten Reibungsplatte (34) radial nach außen bezüglich des ersten Trägerabschnitts (33) befindet;
eine zweite Reibungsplatte (44), die auf dem zweiten Trägerabschnitt (42) getragen ist, so dass sich zumindest ein Teil der zweiten Reibungsplatte (44) radial nach innen bezüglich des zweiten Trägerabschnitts (42) befindet, wobei die zweite Reibungsplatte (44) der ersten Reibungsplatte (34) zugewandt ist, um mit der ersten Reibungsplatte (34) in Kontakt zu bringen und von derselben lösbar zu sein; und
eine Welle (50), die durch das Loch (31) der Kupplungsnabe (30) und das Loch (41) des Kupplungsgehäuses (40) eingeführt ist und einen Ölzufuhrdurchgang (54) zum Zuführen von Öl zu einem Raum zwischen dem ersten Scheibenabschnitt (32) und dem zweiten Scheibenabschnitt (42) aufweist,
**dadurch gekennzeichnet, dass** ein Ölführungsteil (60) auf einer Rückseite des ersten Scheibenabschnitts (32) gebildet ist, wobei das Ölführungsteil (60) einen ausgesparten oder vorstehenden Teil aufweist, der sich von der Mitte des ersten Scheibenabschnitts (32) zu dem äußeren Umfangsrand des ersten Scheibenabschnitts (32) erstreckt, und das Ölführungsteil (60) eine Oberfläche aufweist, entlang derer das Öl zu dem äußeren Umfangsrand geführt wird.

2. Die Nassreibungskupplung (2) gemäß Anspruch 1, bei der das Ölführungsteil (60) eine Rippe (61, 62, 63) aufweist, die von einer Oberfläche der Rückseite des ersten Scheibenabschnitts (32) aus nach hinten ansteigt.

3. Die Nassreibungskupplung (2) gemäß Anspruch 1, bei der zumindest ein Abschnitt des Ölführungsteils (60) an derselben radialen Position angeordnet ist wie die erste Reibungsplatte (34).

4. Die Nassreibungskupplung (8) gemäß Anspruch 1, bei der zumindest ein Abschnitt des Ölführungsteils (60) einen Innenabschnitt, der sich radial nach innen bezüglich des ersten Trägerabschnitts (33) befindet, und einen Außenabschnitt, der sich radial nach außen bezüglich des ersten Trägerabschnitts (33) befindet, aufweist.

5. Die Nassreibungskupplung (2) gemäß Anspruch 1, bei der:
das Ölführungsteil (60) folgende Merkmale aufweist:
eine Mehrzahl von ersten Ölführungsteilen, die sich jeweils von einer radial nach innen bezüglich des ersten Trägerabschnitts (33) gelegenen Position zu einer radial nach außen bezüglich des ersten Trägerabschnitts (33) gelegenen Position erstrecken und entlang einer Umfangsrichtung ausgerichtet sind; und
eine Mehrzahl von zweiten Ölführungsteilen, die jeweils zwischen den ersten Ölführungsteilen angeordnet sind und eine radiale Länge aufweisen, die kürzer ist als die der ersten Ölführungsteile, wobei sich zumindest ein Abschnitt jedes der zweiten Ölführungsteile radial nach außen bezüglich des ersten Trägerabschnitts (33) befindet.

6. Die Nassreibungskupplung (2) gemäß Anspruch 1, bei der sich zumindest ein Abschnitt des Ölführungsteils (60) dahin gehend erstreckt, sich mit einer radialen Richtung (R) zu kreuzen.

7. Die Nassreibungskupplung (2) gemäß Anspruch 6, bei der zumindest ein Abschnitt des Ölführungsteils (60) bezüglich der radialen Richtung (R) zu einer Drehrichtung der Kupplungsnabe (30) zu dem äußeren Umfangsrand hin geneigt ist.

8. Die Nassreibungskupplung (2) gemäß Anspruch 7, bei der ein Abschnitt des Ölführungsteils (60), der näher an dem äußeren Umfangsrand liegt, einen größeren Neigungswinkel bezüglich der radialen Richtung (R) aufweist als ein Abschnitt desselben, der näher an der Mitte liegt.

9. Die Nassreibungskupplung (2) gemäß Anspruch 1, bei der:
eine Basis auf der Rückseite des ersten Scheibenabschnitts (32) gebildet ist, wobei die Basis nach hinten vorsteht und eine flache Oberseite aufweist;
die Höhe der Oberseite höher ist als die Höhe des Ölführungsteils (60); und
die Breite der Oberseite breiter ist als die Breite des Ölführungsteils (60).

10. Die Nassreibungskupplung (2) gemäß Anspruch 1, die ferner einen vorstehenden Abschnitt aufweist, der in der Vorderseite des zweiten Scheibenabschnitts (42) und radial nach innen bezüglich des Ölführungsteils (60) gebildet ist, wobei der vorstehende Abschnitt nach vorne vorsteht und sich in der Umfangsrichtung (5) erstreckt.

11. Die Nassreibungskupplung (2) gemäß Anspruch 1, bei der:
das Ölführungsteil (60) eine Rippe (61, 62, 63) aufweist, die von der Rückseite des ersten Scheibenabschnitts (32) aus ansteigt;
ein vorstehender Abschnitt in der Vorderseite des zweiten Scheibenabschnitts (42) und radial nach innen bezüglich des Ölführungsteils (60) gebildet ist, wobei der vorstehende Abschnitt nach vorne vorsteht und sich in der Umfangsrichtung (5) erstreckt; und
der vorstehende Abschnitt vorsteht, um eine Position zu erreichen, die zumindest einen Abschnitt der Rippe (61, 62, 63) radial überlappt.

12. Die Nassreibungskupplung (2) gemäß Anspruch 1, die ferner einen vorstehenden Abschnitt aufweist, der auf der Rückseite des ersten Scheibenabschnitts (32) und radial nach innen bezüglich des Ölführungsteils (60) gebildet ist, wobei der vorstehende Abschnitt nach hinten vorsteht und sich in der Umfangsrichtung (5) erstreckt.

13. Ein Fahrzeug vom rittlings zu fahrenden Typ, das eine Nassreibungskupplung (2) gemäß Anspruch 1 aufweist.

## Revendications

1. Embrayage à friction humide (2) comprenant:
un moyeu d'embrayage (30) présentant une première pièce en forme de disque (32) et une première pièce de support (33), la première pièce en forme de disque (32) présentant un trou (31) formé en son centre et la première pièce de support (33) s'étendant vers l'avant à partir d'une position radialement intermédiaire de la première pièce en forme de disque (32);
un carter d'embrayage (40) présentant une deuxième pièce en forme de disque (42) et une deuxième pièce de support (43), la deuxième pièce en forme de disque (42) présentant un trou (41) formé en son centre et disposé en arrière de la première pièce en forme de disque (32), et la deuxième pièce de support (43) s'étendant vers l'avant à partir de la deuxième pièce en forme de disque (42) et étant disposée radialement vers l'extérieur de la première pièce de support (33);
une première plaque de friction (34) supportée sur la première pièce de support (33) de sorte qu'au moins une partie de la première plaque de friction (34) soit située radialement vers l'extérieur de la première pièce de support (33);
une deuxième plaque de friction (44) supportée sur la deuxième pièce de support (42) de sorte qu'au moins une partie de la deuxième plaque de friction (44) soit située radialement vers l'intérieur de la deuxième pièce de support (42), la deuxième plaque de friction (44) faisant face à la première plaque de friction (34) de manière à pouvoir venir en contact avec et être séparée de la première plaque de friction (34); et
un arbre (50) introduit à travers le trou (31) du moyeu d'embrayage (30) et le trou (41) du carter d'embrayage (40) et présentant un passage d'alimentation d'huile (54) pour alimenter de l'huile vers un espace entre la première pièce en forme de disque (32) et la deuxième pièce en forme de disque (42),
**caractérisé par le fait que**
une pièce de guidage d'huile (60) est formée sur une face arrière de la première pièce en forme de disque (32), la pièce de guidage d'huile (60) comprenant une partie en creux ou en saillie s'étendant du centre de la première pièce en forme de disque (32) vers le bord périphérique extérieur de la première pièce en forme de disque (32) et la pièce de guidage d'huile (60) présentant une surface le long de laquelle l'huile est guidée vers le bord périphérique extérieur.

2. Embrayage à friction humide (2) selon la revendication 1, dans lequel la pièce de guidage d'huile (60) comprend une ailette (61, 62, 63) ressortant vers l'arrière à partir d'une surface de la face arrière de la première pièce en forme de disque (32).

3. Embrayage à friction humide (2) selon la revendication 1, dans lequel au moins une partie de la pièce de guidage d'huile (60) est disposée à la même position radiale que la première plaque de friction (34).

4. Embrayage à friction humide (2) selon la revendication 1, dans lequel au moins une partie de la pièce de guidage d'huile (60) présente une partie intérieure située radialement vers l'intérieur de la première pièce de support (33) et une partie extérieure située radialement vers l'extérieur de la première pièce de support (33).

5. Embrayage à friction humide (2) selon la revendication 1, dans lequel:
la pièce de guidage d'huile (60) comprend:
une pluralité de premières pièces de guidage d'huile s'étendant, chacune, d'une position radialement vers l'intérieur de la première pièce de support (33) vers une position radialement vers l'extérieur de la première pièce de support (33) et étant alignées dans une direction circonférentielle; et
une pluralité de deuxièmes pièces de guidage d'huile disposées, chacune, entre les premières pièces de guidage d'huile et présentant une longueur radiale plus courte que celle des premières pièces de guidage d'huile, au moins une partie de chacune des deuxièmes pièces de guidage d'huile étant située radialement vers l'extérieur de la première pièce de support (33).

6. Embrayage à friction humide (2) selon la revendication 1, dans lequel au moins une partie de la pièce de guidage d'huile (60) s'étend de manière à venir en intersection avec une direction radiale (R).

7. Embrayage à friction humide (2) selon la revendication 6, dans lequel au moins une partie de la pièce de guidage d'huile (60) est inclinée par rapport à la direction radiale (R) vers une direction de rotation du moyeu d'embrayage (30) vers le bord périphérique extérieur.

8. Embrayage à friction humide (2) selon la revendication 7, dans lequel une partie de la pièce de guidage d'huile (60) plus proche du bord périphérique extérieur présente un angle d'inclinaison plus grand par rapport à la direction radiale (R) qu'une partie de cette dernière plus proche du centre.

9. Embrayage à friction humide (2) selon la revendication 1, dans lequel:
une base est formée sur la face arrière de la première pièce en forme de disque (32), la base faisant saillie vers l'arrière et présentant une face supérieure plane;
la hauteur de la face supérieure est plus élevée que la hauteur de la pièce de guidage d'huile (60); et
la largeur de la face supérieure est plus large que la largeur de la pièce de guidage d'huile (60).

10. Embrayage à friction humide (2) selon la revendication 1, comprenant par ailleurs une partie en saillie formée dans la face avant de la deuxième pièce en forme de disque (42) et radialement vers l'intérieur de la pièce de guidage d'huile (60), la partie en saillie faisant saillie vers l'avant et s'étendant dans la direction circonférentielle (5).

11. Embrayage à friction humide (2) selon la revendication 1, dans lequel:
la pièce de guidage d'huile (60) comprend une ailette (61, 62, 63) s'élevant à partir de la face arrière de la première pièce en forme de disque (32);
une partie en saillie est formée dans la face avant de la deuxième pièce en forme de disque (42) et radialement vers l'intérieur de la pièce de guidage d'huile (60), la partie en saillie faisant saillie vers l'avant et s'étendant dans la direction circonférentielle (5); et
la partie en saillie fait saillie de manière à atteindre une position venant radialement en recouvrement avec au moins une partie de l'ailette (61, 62, 63).

12. Embrayage à friction humide (2) selon la revendication 1, comprenant par ailleurs une partie en saillie formée sur la face arrière de la première pièce en forme de disque (32) et radialement vers l'intérieur de la pièce de guidage d'huile (60), la partie en saillie faisant saillie vers l'arrière et s'étendant dans la direction circonférentielle (5).

13. Véhicule du type à enfourcher comprenant un embrayage à friction humide (2) selon la revendication 1.
